(19) Europäisches Patentamt
European Patent Office
Office européen des brevets

(11) **EP 4 787 336 A1**

(12) **EUROPEAN PATENT APPLICATION**

(43) Date of publication:
**05.08.2026 Bulletin 2026/32**

(21) Application number: **25305131.2**

(22) Date of filing: **30.01.2025**

(51) International Patent Classification (IPC):
**G06V 10/82** (2022.01)          **G06V 20/13** (2022.01)
**G06V 20/10** (2022.01)

(52) Cooperative Patent Classification (CPC):
**G06V 20/13; G06V 10/82; G06V 20/194**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TotalEnergies OneTech
92400 Courbevoie (FR)**

(72) Inventors:
• **MATRULLO, Emanuela
  92078 PARIS LA DEFENSE CEDEX (FR)**
• **MKADMI, Lamiae
  92078 PARIS LA DEFENSE CEDEX (FR)**
• **MASSON, Guillaume
  92078 PARIS LA DEFENSE CEDEX (FR)**
• **ALBERGEL, Simon
  92078 PARIS LA DEFENSE CEDEX (FR)**

(74) Representative: **Lavoix
2, place d'Estienne d'Orves
75441 Paris Cedex 09 (FR)**

(54) **A METHOD FOR DETERMINING SURFACES OF WATERBODIES IN A TARGET AREA**

(57)    The invention relates to a method for determining surfaces of waterbodies (W) in a target area, the method comprising:
- a phase of building a training database (TDB) comprising for each elementary portion (E) of a georeferenced representation of a training area: an aerial image ($IM_M$), water index image(s) ($IM_W$) derived from the aerial image ($IM_M$) using a water index formula and a ground truth (G) binary mask, each elementary portion (E) representing a zone of the training area where at least a part of a waterbody surface (W) is present,
- a phase of training a determination model using the training database (TDB) so as to obtain a trained determination model, and
- a phase of inferencing the trained determination model.

FIG.3

**Description**

TECHNICAL FIELD OF THE INVENTION

The present invention concerns a method for determining surfaces of waterbodies in a target area. The present invention also concerns an associated computer program product. The present invention also relates to an associated readable information carrier.

BACKGROUND OF THE INVENTION

Solar energy plays a decisive role in the energy transition.

Locating new sites where solar panels can be easily installed is an ongoing challenge. Today floating photovoltaic panel (PV) systems offer new opportunities to increase solar generation capacity especially in regions where available land is scarce.

However, waterbodies detection for floating PV installation could be critical, especially those on industrial/private sites. In addition, the waterbodies surfaces are suitable to evolve through seasons (evaporation during the summer, for example) which complicated the determination of the available surface for the floating PV.

SUMMARY OF THE INVENTION

Hence, there exists a need for a method enabling to determine the surface of a waterbody in a precise and easy way.

To this end, the invention relates to a method for determining surfaces of waterbodies in a target area, the method comprising the following phases which are computer-implemented:

- a phase of building a training database comprising the following steps:

  • obtaining elementary portions of a georeferenced representation of a training area, each elementary portion representing a zone of the training area where at least a part of a waterbody surface is present,
  • for each elementary portion,

    ◦ collecting at least one aerial image matching said elementary portion, said aerial image having one or more spectral bands,
    ◦ selecting at least one formula, called water index formula, representative of a given combination of the spectral bands of the aerial image to highlight the surfaces of waterbodies,
    ◦ deriving at least one water index image from the aerial image using said water index formula,
    o defining a ground truth binary mask delivering an information on the presence or absence of waterbody surface,

  • building the training database, said training database comprising for each elementary portion: the corresponding aerial image, the water index image(s) and the ground truth binary mask ,

- a phase of training a determination model using the training database so as to obtain a trained determination model enabling to determine the surfaces of waterbodies in aerial images, and
- a phase of inferencing the trained determination model comprising the following steps:

  • building a inference database comprising the following sub steps:

    ◦ partitioning into several tiles a georeferenced representation of the target area,
    ◦ for each elementary tile:

      ▪ collecting at least one aerial image having the same spectral bands defined in the phase of building the training database,
      ▪ computing at least one water index image derived from the aerial images using the same water index formula defined in the phase of building the training database,

  • determining waterbodies surface using the trained model on the inference database.

The method according to the invention may comprise one or more of the following features considered alone or in any combination that is technically possible:

- the water index(es) formula is/are chosen in the following list:

  - Sentinel Water Mask index given by the formula: $\frac{B2 + B3}{B8 + B11}$,
  - Automated Water Extraction index given by the formula: 4.0*(B3 - B11) - 0.25*B8 + 2.75*B12,
  - Automated Water Extraction index with shadows given by the formula:

  $$B2 + 2.5 * B3 - 1.5 * (B8 + B11) - 0.25 * B12,$$

  - Multi Band Water Index given by the formula: (2.0 * B3) -B4 - B11 - B12, where indices B1 to B12 correspond to spectral bands of the Sentinel-2 satellites;

- the elementary portions are obtained by splitting the georeferenced representation of the training area into several patches and keeping only the patches that include waterbody surface;
- the determination model is a convolutional neural network;
- the determination model has an architecture based on UNet;
- the training of the determination model is based on a dice loss, the dice loss having the following formula:

$$dice\ loss = 1 - \frac{2|A \cap B|}{|A| + |B|}$$

where:

  - A corresponds to a predicted surface(s) of waterbody(ies) by the determination model, and
  - B is the ground truth binary mask;

- the method comprises a phase of displaying, on a display, the determined surfaces of waterbodies highlighted on the corresponding aerial images;
- the method is applied for the installation of floating photovoltaic panels in the target area;
- the method comprises:

  - conducting the inferencing phase in the target area at multiple time periods,
  - evaluating the portion of the waterbodies surfaces that remains stable over time, and,
  - optionally, considering said portions for the installation of floating photovoltaic panels;

- the method comprises a phase of determining a layout of floating photovoltaic panels based on the determined surface for the waterbody.

The invention also relates to a computer program product comprising a readable information carrier having stored thereon a computer program comprising program instructions, the computer program being loadable onto a data processing unit and causing a method as previously described to be carried out when the computer program is carried out on the data processing unit.

The invention also relates to a readable information carrier on which is stored a computer program product as previously described.

BRIEF DESCRIPTION OF THE DRAWINGS

The invention will be easier to understand in view of the following description, provided solely as an example and with reference to the appended drawings in which:

- Figure 1 is a schematic view of an example of a computer for determining surfaces of waterbodies in a target area,
- Figure 2 is a schematic representation illustrating the implementation of phases of a method for determining surfaces of waterbodies in a target area,

- Figure 3 is a schematic representation of elements forming the training database,
- Figure 4 is an example of graphics illustrating respectively a distribution of pixels representing water, respectively lands, for each elementary portion of the training data of a training database,
- Figure 5 is an example of a confusion matrix obtained for the test data of a training database after training the determination model on the basis of the training data associated to figure 4,
- Figure 6 is another example of graphics illustrating respectively a distribution of pixels representing water, respectively lands, for each elementary portion of the training data of a training database, and
- Figure 7 is an example of a confusion matrix obtained for the test data of a training database after training the determination model on the basis of the training data associated to figure 6.

DETAILED DESCRIPTION OF SOME EMBODIMENTS

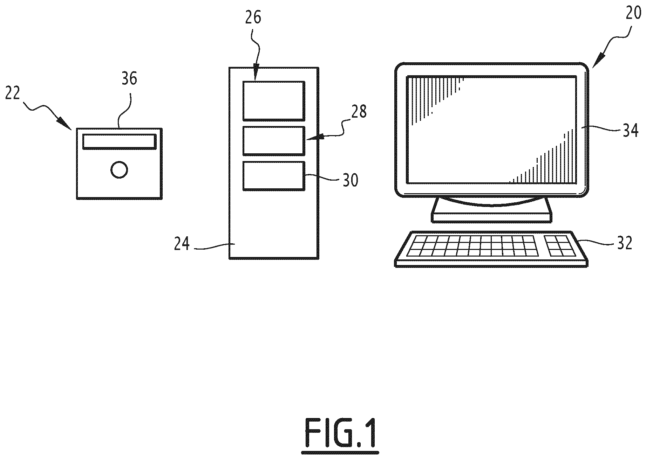

A computer 20 and a computer program product 22 are illustrated on figure 1.

The computer 20 is preferably a computer.

More generally, the calculator 20 is a computer or computing system, or similar electronic computing device adapted to manipulate and/or transform data represented as physical, such as electronic, quantities within the computing system's registers and/or memories into other data similarly represented as physical quantities within the computing system's memories, registers or other such information storage, transmission or display devices.

The calculator 20 interacts with the computer program product 22.

As illustrated on figure 1, the calculator 20 comprises a processor 24 comprising a data processing unit 26, memories 28 and a reader 30 for information media. In the example illustrated on figure 1, the calculator 20 comprises a human machine interface 32, such as a keyboard, and a display 34.

The computer program product 22 comprises an information medium 36.

The information medium 36 is a medium readable by the calculator 20, usually by the data processing unit 26. The readable information medium 36 is a medium suitable for storing electronic instructions and capable of being coupled to a computer system bus.

By way of example, the information medium 36 is a USB key, a floppy disk or flexible disk (of the English name "Floppy disc"), an optical disk, a CD-ROM, a magneto-optical disk, a ROM memory, a memory RAM, EPROM memory, EEPROM memory, magnetic card or optical card.

On the information medium 36 is stored the computer program 22 comprising program instructions.

The computer program 22 is loadable on the data processing unit 26 and is adapted to entail the implementation of a method for determining surfaces of waterbodies W in an area, when the computer program 22 is loaded on the processing unit 26 of the calculator 20.

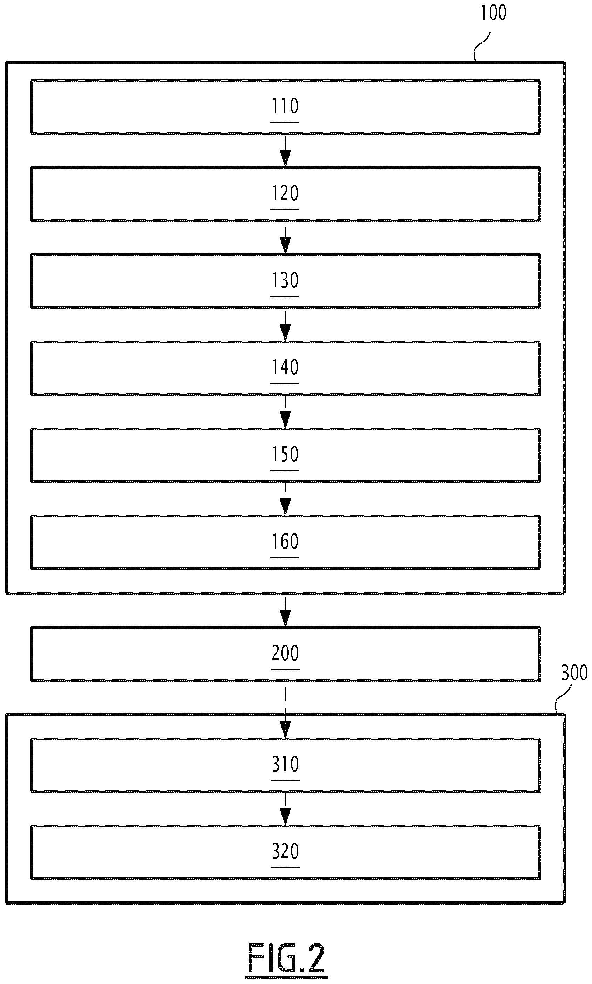

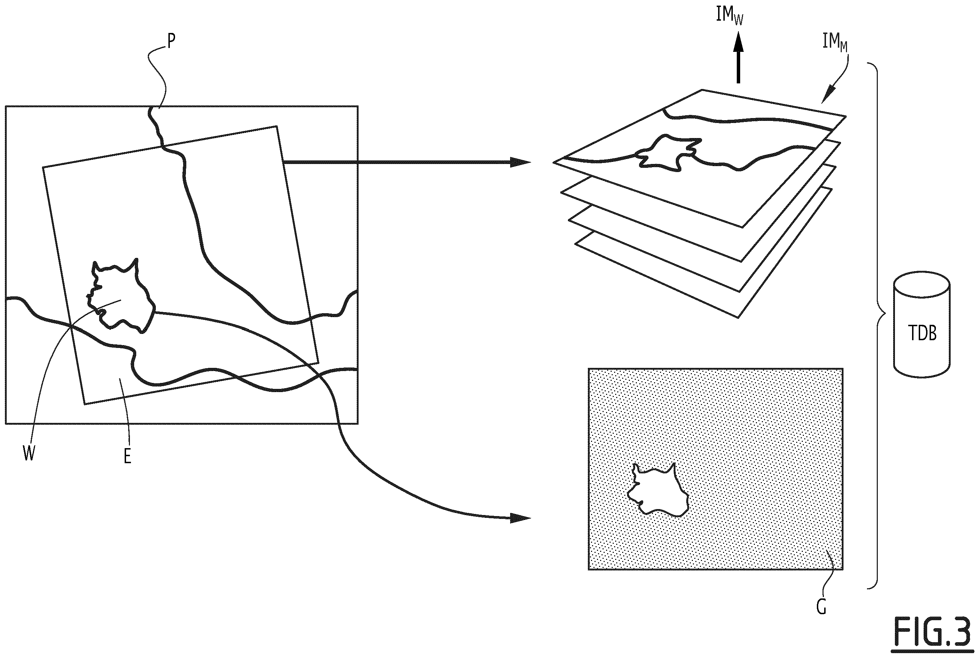

A method for determining surfaces of waterbodies W in an area, will now be described with reference to the organigram of figure 2, and to figures 3 to 5. The determined surfaces are intended to be used for the installation of floating photovoltaic panels.

The waterbodies W are, for example, natural or artificial waterbody. The waterbodies W are, for example, lake, reservoir, lagoon, or any other type of waterbody.

The determination method comprises a phase 100 of building a training database TDB. The building phase 100 is, for example, implemented by the calculator 20 interacting with the computer program product 22, that is to say is computer-implemented.

The building phase 100 comprises a step 110 of obtaining elementary portions E of a georeferenced representation of a training area.

Each elementary portion E represents a zone of the area where at least a part of a waterbody surface W is present (and labelled).

The georeferenced representation is, for example, an image or a cartography. The georeferenced representation is, for example, extracted from the tool OpenStreetMap. For example, the surfaces of waterbodies W have been identified by users of OpenSteetMap.

In an example of embodiment, the elementary portions E have been obtained by splitting the georeferenced representation of the training area into several patches (polygons for example) and keeping only the patches that include waterbody surface W.. The elementary portions E are thus preferably of the same size. The elementary portions E are, for example, squares.

It should be noted that the different elementary portions E taken into account in the building phase 100 could come from a same training area or from different training areas.

The building phase 100 comprises, for each elementary portion E, a step 120 of collecting at least one aerial image $IM_M$ matching said elementary portion E, said aerial image $IM_M$ having one or more spectral bands.. Each aerial image $IM_M$ corresponds thus to the same localization than the corresponding elementary portion E.

Preferably, each aerial image $IM_M$ comprises at least spectral bands in the visible range (400 nanometers (nm) to 700 nm) and in the near-infrared (700 nm to 3 micrometer ($\mu$m)).

The aerial image $IM_M$ have been acquired by a multispectral camera.

For example, the multispectral camera is mounted on a satellite and the aerial image $IM_M$ are satellite images. For example, the aerial image $IM_M$ have been obtained by the system of satellites Sentinel-2A. In that case, the aerial image $IM_M$ correspond preferably to the 12 spectral bands of Sentinel-2.

In a variant, the multispectral camera is mounted on an aircraft, for example a drone.

The building phase 100 comprises, for each elementary portion E, a step 130 of selecting at least one formula, called water index formula WI, representative of a given combination of the spectral bands of the aerial image to highlight the surfaces of waterbodies W.

Preferably, the water index(es) formula WI is/are chosen in the following list:

- Sentinel Water Mask index given by the formula: $\frac{B2 + B3}{B8 + B11}$,

- Automated Water Extraction index given by the formula: 4.0*(B3 - B11) - 0.25*B8 + 2.75*B12,

- Automated Water Extraction index with shadows given by the formula:

$$B2 + 2.5 * B3 - 1.5 * (B8 + B11) - 0.25 * B12,$$

- Multi Band Water Index given by the formula: (2.0 * B3) -B4 - B11 - B12, Where indices B1 to B12 correspond to spectral bands of the Sentinel-2 satellites.

In particular, the table below summarizes the spectral bands corresponding to the bands B1 to B12 of Sentinel-2.

|  | Central wavelength (nm) | Bandwidth (nm) | Spatial resolution (m) |
|---|---|---|---|
| Band 1 - Coastal aerosol | 442.2 | 21 | 60 |
| Band 2 - Blue | 492.1 | 66 | 10 |
| Band 3 - Green | 559.0 | 36 | 10 |
| Band 4 - Red | 664.9 | 31 | 10 |
| Band 5 - Vegetation red edge | 703.8 | 16 | 20 |
| Band 6 - Vegetation red edge | 739.1 | 15 | 20 |
| Band 7 - Vegetation red edge | 779.7 | 20 | 20 |
| Band 8 - NIR | 832.9 | 106 | 10 |
| Band 8A - Narrow NIR | 864.0 | 22 | 20 |
| Band 9 - Water vapour | 943.2 | 21 | 60 |
| Band 10 - SWIR - Cirrus | 1376.9 | 30 | 60 |
| Band 11 - SWIR | 1610.4 | 94 | 20 |
| Band 12 - SWIR | 2185.7 | 185 | 20 |

The building phase 100 comprises, for each elementary portion E, a step 140 of deriving at least one water index image $IM_W$ from the aerial image $IM_M$ using said water index formula WI.

The building phase 100 comprises, for each elementary portion E, a step 150 of defining a ground truth G binary mask delivering an information on the presence or absence of waterbody surface W. The ground truth G binary mask is obtained by applying a binary mask on the corresponding elementary portion E. The step 150 could be carried out before the collecting step 120, selecting step 130 and deriving step 140, or in parallel.

The building phase 100 comprises a step 160 of building the training database TDB such that said training database TDB comprises for each elementary portion E: the corresponding aerial image $IM_M$, the water index image(s) $IM_W$ and the ground truth G binary mask.

In particular, figure 3 illustrates a portion P of a georeferenced representation from which an elementary portion E is extracted. The elementary portion E represents a waterbody W. A ground truth G binary mask is obtained from the elementary portion E. An aerial image $IM_M$ matching the elementary portion E and having several spectral bands is also obtained, and water index image(s) $IM_W$ are then calculated on this basis. The training database TDB is then formed of the ground truth G binary mask, the aerial image $IM_M$, and the water index image(s) $IM_W$.

In the case of aerial images $IM_M$ obtained from Sentinel-2, for each elementary portion E, the database comprises preferably the ground truth G binary mask, the aerial $IM_M$ in all the spectral bands of Sentinel-2, and 4 water index images $IM_W$ derived from the 4 water index formula WI, defined above.

The determination method comprises a phase 200 of training a determination model M using the training database TDB so as to obtain a trained determination model M' enabling to determine the surfaces of waterbodies W in aerial images $IM_M$. The training phase 200 is, for example, implemented by the calculator 20 interacting with the computer program product 22, that is to say is computer-implemented.

The trained determination model M' enables to determine the surfaces of waterbodies W in aerial images $IM_M$ of a target area (output) as a function of said aerial images $IM_M$ (input) and of water index image(s) $IM_W$ derived from the aerial images $IM_M$ by computing the same water index(es) than during the building phase (input). The trained determination model M' enables to segment the waterbodies W on aerial images $IM_M$ of an area.

The determination model M is, for example, a deep learning model.

Preferably, the determination model M is a convolutional neural network (CNN).

Preferably, the determination model M has an architecture based on UNet.

Preferably, the UNet architecture has been optimized by reducing the number of layers. Indeed, a U-Net encoder-decoder architecture typically consists of a contracting path (encoder), followed by an expansive path (decoder). Each path consist of a sequence of convolution layers. There must be the same number of encoding layers as there are decoder. This number is called the depth of the model. Typical U-Nets are made with a depth of 4, we have found that 3 works best for the application. This enables a faster training and inference.

The training technique is typically based on supervised learning, with training and validation substeps (performed by dividing the training database DB, for example 80% of the data for the training substep and 20% of the data for the validation substep).

Preferably, the training of the determination model M is based on a dice loss, the dice loss having the following formula:

$$dice\ loss = 1 - \frac{2|A \cap B|}{|A| + |B|}$$

where:

- A corresponds to a predicted surface(s) of waterbody(ies) (W) by the determination model, and
- B is the ground truth (G) binary mask.

The dice loss is comprised between 0 (no overlap) and 1 (perfect overlap). Such a dice loss is effective for handling class imbalance in segmentation tasks

The determination method comprises a phase 300 of inferencing the trained determination model M'. The inferencing phase 300 is, for example, implemented by the calculator 20 interacting with the computer program product 22, that is to say is computer-implemented.

The inferencing phase 300 comprises a step 310 of building an inference database IDB. The inference database IDB comprises the following sub steps:

- partitioning into several tiles T a georeferenced representation of the target area,
- for each elementary tile T, collecting at least one aerial image $IM_M$ having the same spectral bands defined in the phase of building the training database TDB, and
- for each elementary tile T, computing at least one water index image $IM_W$ derived from the aerial images $IM_M$ using the same water index formula WI defined in the phase of building the training database TDB.

The inferencing phase 300 comprises a step 320 of determining waterbodies surface W using the trained model M' on the inference database IDB.

The above method can be applied, in particular, for the installation of floating photovoltaic panels in the target area.

Optionally, the method comprises also:

- conducting the inferencing phase in the target area at multiple time periods.

- evaluating the portion of the waterbodies surfaces that remains stable over time.

This step is for example also computer implemented.

- optionally, considering said portions for the installation of floating photovoltaic panels. This step is for example also computer implemented.

Optionally, the method comprises a phase of determining a layout of floating photovoltaic panels based on the determined surface for the waterbody W. The determination phase is, for example, implemented by the calculator 20 interacting with the computer program product 22, that is to say is computer-implemented. In another example, the determination phase 500 is carried out by an operator.

Optionally, the method comprises a phase of displaying, on a display, the determined surfaces of waterbodies W highlighted on the corresponding aerial images $IM_M$.

EXPERIMENTAL DATA

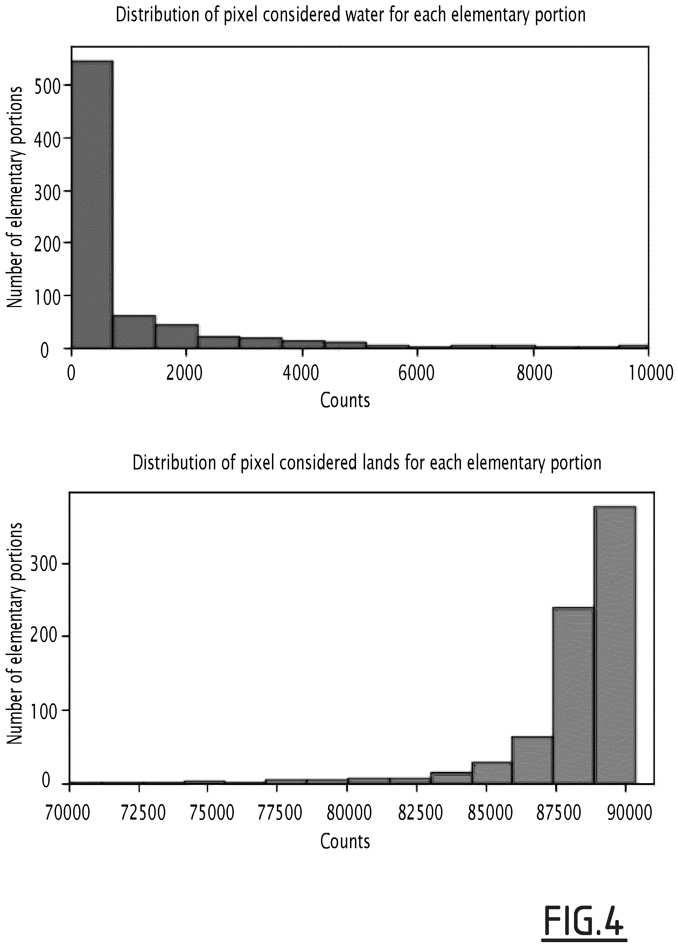

The approach was tested on 5039 images in Spain. Among the 5039 images, 4031 were used for the training, and 1008 for the testing. We chose as segmentation model a simplified version of standard UNet with the Dice Loss mentioned previously. The diagrams representing the distribution of pixels representing water versus lands, which have been used for the dice loss, are illustrated on figure 4.

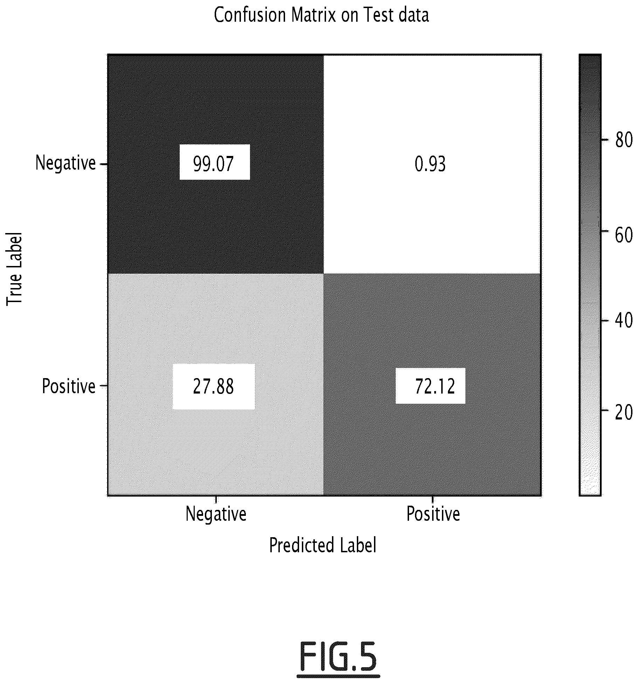

Figure 5 illustrates the confusion matrix on the test data. As illustrated on this figure the results converge, however there still is an important number of false negatives. After reviewing the training data, it appears that the determination model performs better than the OpenStreetMap data where the surface of the waterbodies W are only roughly labelled. Hence, the number of false negative is not representative, and should be lower.

In particular, the determination model well resolves the precise perimeter of the surfaces of waterbodies W. Sometimes it fails in detecting small waterbodies surfaces W, but often finds unmapped waterbodies surfaces W in OpenStreetMap.

Applying the algorithm to images taken at different time periods, it accomplishes its task with a useful area assessment that avoids seasonal variations as much as possible and a simple automatic layout assessment to optimize the placement of the floating PV.

A way to improve the precision of the determination model could be to train it on the basis of data containing sea coastline (more water), because those data would less depend on seasonal effect or tide for example.

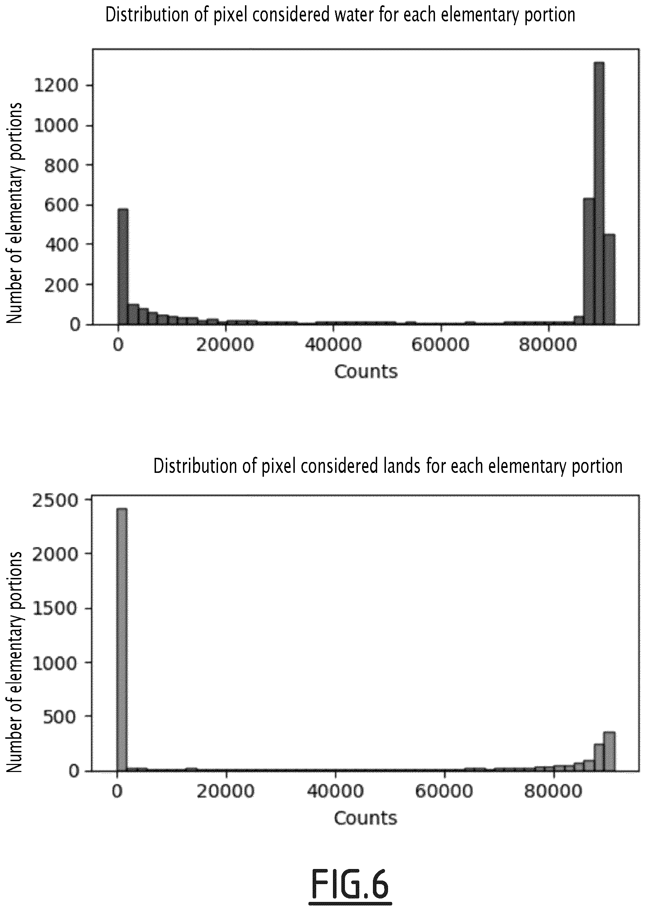

Another experiment was carried out on the basis of more data. In particular, 9757 images were now used for the training, and 2440 for the testing. The segmentation model and the dice loss used were the same than previously. The diagrams representing the distribution of pixels representing water versus lands, which have been used for the dice loss, are illustrated on figure 6.

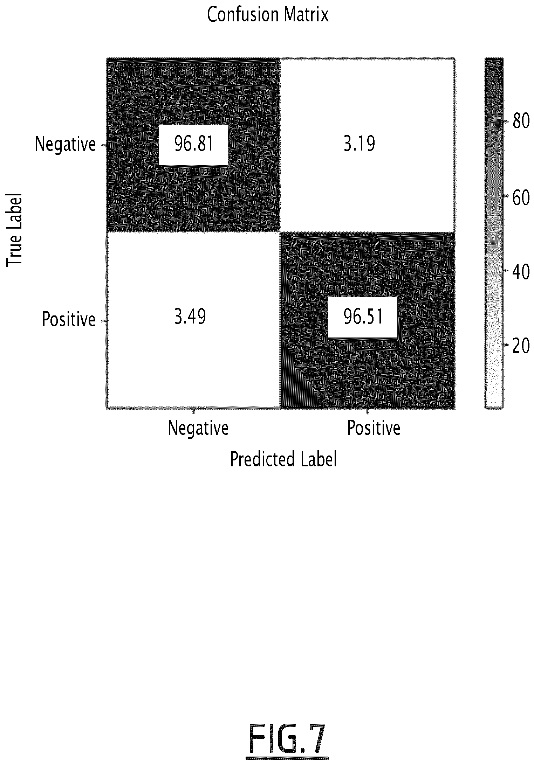

Figure 7 illustrates the confusion matrix on the test data for this last experiment. As illustrated on this figure, due to a higher number of data for the training, the number of false negatives has decreased.

CONCLUSION

Hence, the above method enables to provide an automated approach to detect human-made and natural waterbodies surfaces W from images taken from the sky using a determination model that is worldwide deployable. This enables to evaluate the size of stable water, which can be used to propose a layout assessment of floating PV systems.

The use of water index images for training the model enables to better highlight the surfaces of waterbodies W. Hence, the determination of the surfaces of waterbodies W with the trained model is more precise and easy to obtain for an operator.

The person skilled in the art will understand that the embodiments and variants described above can be combined to form new embodiments provided that they are technically compatible.

**Claims**

1. A method for determining surfaces of waterbodies (W) in a target area, the method comprising the following phases which are computer-implemented:

   - a phase of building a training database (TDB) comprising the following steps:

• obtaining elementary portions (E) of a georeferenced representation of a training area, each elementary portion (E) representing a zone of the training area where at least a part of a waterbody surface (W) is present,
• for each elementary portion (E),

  ○ collecting at least one aerial image ($IM_M$) matching said elementary portion (E), said aerial image ($IM_M$) having one or more spectral bands,
  ○ selecting at least one formula, called water index formula (WI), representative of a given combination of the spectral bands of the aerial image to highlight the surfaces of waterbodies (W),
  ○ deriving at least one water index image ($IM_W$) from the aerial image ($IM_M$) using said water index formula (WI),
  ○ defining a ground truth (G) binary mask delivering an information on the presence or absence of waterbody surface (W),

• building the training database (TDB), said training database comprising for each elementary portion (E): the corresponding aerial image ($IM_M$), the water index image(s) ($IM_W$) and the ground truth (G) binary mask,

- a phase of training a determination model (M) using the training database (TDB) so as to obtain a trained determination model (M') enabling to determine the surfaces of waterbodies (W) in aerial images ($IM_M$), and
- a phase of inferencing the trained determination model (M') comprising the following steps:

• building a inference database (IDB) comprising the following sub steps:

  ○ partitioning into several tiles (T) a georeferenced representation of the target area,
  ○ for each elementary tile (T):

    ■ collecting at least one aerial image ($IM_M$) having the same spectral bands defined in the phase of building the training database (TDB),
    ■ computing at least one water index image ($IM_W$) derived from the aerial images ($IM_M$) using the same water index formula (WI) defined in the phase of building the training database (TDB),

• determining waterbodies surface (W) using the trained model (M') on the inference database (IDB).

2. A method according to claim 1, wherein the water index(es) formula (WI) is/are chosen in the following list:

• Sentinel Water Mask index given by the formula: $\dfrac{B2 + B3}{B8+B11}$,
• Automated Water Extraction index given by the formula: 4.0*(B3 - B11) - 0.25*B8 + 2.75*B12,
• Automated Water Extraction index with shadows given by the formula:

$$B2 + 2.5 * B3 - 1.5 * (B8 + B11) - 0.25 * B12,$$

• Multi Band Water Index given by the formula: (2.0 * B3) -B4 - B11 - B12, where indices B1 to B12 correspond to spectral bands of the Sentinel-2 satellites.

3. A method according to claim 1 or 2, wherein the elementary portions (E) are obtained by splitting the georeferenced representation of the training area into several patches and keeping only the patches that include waterbody surface (W).

4. A method according to any one of claims 1 to 3, wherein the determination model (M) is a convolutional neural network.

5. A method according to any one of claims 1 to 4, wherein the determination model (M) has an architecture based on UNet.

6. A method according to any one of claims 1 to 5, wherein the training of the determination model (M) is based on a dice loss, the dice loss having the following formula:

$$dice\ loss = 1 - \frac{2|A \cap B|}{|A| + |B|}$$

where:

- A corresponds to a predicted surface(s) of waterbody(ies) (W) by the determination model, and
- B is the ground truth (G) binary mask.

7. A method according to any one of claims 1 to 6, wherein the method comprises a phase of displaying, on a display, the determined surfaces of waterbodies (W) highlighted on the corresponding aerial images ($IM_M$).

8. A method according to any one of claims 1 to 7, wherein the method is applied for the installation of floating photovoltaic panels in the target area.

9. A method according to any one of claims 1 to 8, wherein the method comprises:

- conducting the inferencing phase in the target area at multiple time periods,
- evaluating the portion of the waterbodies surfaces that remains stable over time, and,
- optionally, considering said portions for the installation of floating photovoltaic panels.

10. A method according to any one of claim 1 to 9, wherein the method comprises a phase of determining a layout of floating photovoltaic panels based on the determined surface for the waterbody (W).

11. A computer program product comprising a readable information carrier having stored thereon a computer program comprising program instructions, the computer program being loadable onto a data processing unit and causing a method according to any one of claims 1 to 10 to be carried out when the computer program is carried out on the data processing unit.

12. A readable information carrier on which a computer program product according to claim 11 is stored.

<u>FIG.1</u>

FIG.2

EP 4 787 336 A1

FIG.3

TDB

12

FIG.4

Confusion Matrix on Test data

FIG.5

Distribution of pixel considered water for each elementary portion

Distribution of pixel considered lands for each elementary portion

FIG.6

Confusion Matrix

FIG.7

Europäisches
Patentamt

European
Patent Office

Office européen
des brevets

# EUROPEAN SEARCH REPORT

**Application Number**

EP 25 30 5131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABID NOSHEEN ET AL: "UCL: Unsupervised Curriculum Learning for water body classification from remote sensing imagery", INTERNATIONAL JOURNAL OF APPLIED EARTH OBSERVATION ANDGEOINFORMATION, ELSEVIER, AMSTERDAM, NL, vol. 105, 29 October 2021 (2021-10-29), XP086897522, ISSN: 0303-2434, DOI: 10.1016/J.JAG.2021.102568 [retrieved on 2021-10-29] | 1-5,7 | INV. G06V10/82 G06V20/13 G06V20/10 |
| Y | * 2.2.2 ; 4.3.1.4 ; 4.3.1.5 ; 4.3.1.6 | 8-10 | |
| A | ; 4.3.1.2 ; equation 6 ; equation 7 ; 4.3.1.3 ; 3.1 ; 5.2 * | 6 | |
| | ----- | | |
| Y | ANTHONY ORTIZ ET AL: "An Artificial Intelligence Dataset for Solar Energy Locations in India", ARXIV.ORG, CORNELL UNIVERSITY LIBRARY, 201 OLIN LIBRARY CORNELL UNIVERSITY ITHACA, NY 14853, 31 January 2022 (2022-01-31), XP091141786, * page 5, second paragraph * | 8-10 | |
| | ----- | | **TECHNICAL FIELDS SEARCHED (IPC)** |
| A | SPECHT OKTAWIA: "Application of NDWI and Machine Learning Techniques for Shoreline Extraction", 2024 IEEE INTERNATIONAL WORKSHOP ON METROLOGY FOR THE SEA; LEARNING TO MEASURE SEA HEALTH PARAMETERS (METROSEA), IEEE, 14 October 2024 (2024-10-14), pages 524-528, XP034764124, DOI: 10.1109/METROSEA62823.2024.10765764 [retrieved on 2024-12-03] | 1 | G06V |
| | ----- | | |
| A | US 2024/013531 A1 (HU CHUANMIN [US]) 11 January 2024 (2024-01-11) | 1 | |
| | ----- | | |
| | -/-- | | |

The present search report has been drawn up for all claims

| Place of search | Date of completion of the search | Examiner |
|---|---|---|
| The Hague | 20 June 2025 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

page 1 of 2

Europäisches
Patentamt
European
Patent Office
Office européen
des brevets

## EUROPEAN SEARCH REPORT

**Application Number**

EP 25 30 5131

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CARLOS LARA-ALVAREZ ET AL: "A literature review on satellite image time series forecasting: Methods and applications for remote sensing", WILEY INTERDISCIPLINARY REVIEWS: DATA MINING AND KNOWLEDGE DISCOVERY, JOHN WILEY & SONS, HOBOKEN, USA, vol. 14, no. 3, 29 January 2024 (2024-01-29), page n/a, XP072633186, ISSN: 1942-4787, DOI: 10.1002/WIDM.1528 ----- | 1 | |
| A | JOHANNES JAKUBIK ET AL: "Foundation Models for Generalist Geospatial Artificial Intelligence", ARXIV.ORG, CORNELL UNIVERSITY LIBRARY, 201 OLIN LIBRARY CORNELL UNIVERSITY ITHACA, NY 14853, 28 October 2023 (2023-10-28), XP091647599, ----- | 1 | |
| A | SHI WEIYUE ET AL: "An effective superpixel-based graph convolutional network for small waterbody extraction from remotely sensed imagery", INTERNATIONAL JOURNAL OF APPLIED EARTH OBSERVATION AND GEOINFORMATION, ELSEVIER, AMSTERDAM, NL, vol. 109, 27 April 2022 (2022-04-27), XP087049222, ISSN: 1569-8432, DOI: 10.1016/J.JAG.2022.102777 [retrieved on 2022-04-27] ----- | 1 | TECHNICAL FIELDS SEARCHED (IPC) |

The present search report has been drawn up for all claims

| Place of search | Date of completion of the search | Examiner |
|---|---|---|
| The Hague | 20 June 2025 | Versluis, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 30 5131

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2025

| Patent document cited in search report | Publication date | Patent family member(s) | Publication date |
|---|---|---|---|
| US 2024013531 A1 | 11-01-2024 | NONE | |

EPO FORM P0459

For more details about this annex : see Official Journal of the European Patent Office, No. 12/82